# EUROPÄISCHE PATENTSCHRIFT

(11) **EP 0 987 223 B1**
(45) Veröffentlichungstag und Bekanntmachung des Hinweises auf die Patenterteilung: **22.09.2004**
(21) Anmeldenummer: 99116386.6
(22) Anmeldetag: 20.08.1999
(51) Int. Cl.: C02F 1/50

(54) **Oligodynamische Behandlung eines Süsswasservolumens**
Oligodynamic treatment of a fresh water volume
Traitement oligodynamique d'un volume d'eau douce

(30) Priorität: 22.08.1998 DE 19838231
(43) Veröffentlichungstag der Anmeldung: 22.03.2000
(73) Patentinhaber: Schwarzkopf, Josef, 94508 Schöllnach (DE)
(72) Erfinder: Schwarzkopf, Josef, 94508 Schöllnach (DE)
(74) Vertreter: Stenger, Watzke & Ring Patentanwälte

(56) Entgegenhaltungen:
- EP-A- 0 211 349
- WO-A-97/37939
- DE-A- 3 203 090
- DE-A- 3 543 223
- US-A- 3 752 747
- US-A- 4 415 854
- US-A- 4 416 854
- US-A- 5 148 772
- PATENT ABSTRACTS OF JAPAN vol. 018, no. 134 (C-1176), 4. März 1994 (1994-03-04) & JP 05 317862 A (MITSUBISHI HEAVY IND LTD), 3. Dezember 1993 (1993-12-03)
- PATENT ABSTRACTS OF JAPAN vol. 017, no. 523 (C-1113), 21. September 1993 (1993-09-21) & JP 05 146234 A (RIYOUYOU SANGYO KK), 15. Juni 1993 (1993-06-15)

## Beschreibung

Die Erfindung betrifft ein Verfahren zur Entspannung von Süßwasser und zur Stabilisierung des Gleichgewichtes eines Süßwasservolumens, insbesondere im Hinblick auf übermäßige Ausbreitung von Organismen sowie Keimbildung.

In der Alltagsanwendung sind eine Vielzahl von Süßwasservolumina bekannt, beispielsweise Aquarien, Schwimmbäder, insbesondere auch Außenanlagen wie Teiche, Regenwasserreservoirs und dergleichen, welche in Abhängigkeit vom Verwendungszweck in erster Linie mit chemischen Mitteln behandelt werden, um entweder das Wasser auf einen gewünschten Grad zu entspannen oder beispielsweise ein übermäßiges Algenwachstum zu verhindern. Auch andere Organismen und Keime werden bekämpft. So wird beispielsweise in Schwimmbädern vorrangig Chlor zur Keimabtötung und zur Vermeidung von Keimausbreitung eingesetzt.

Zur Behandlung von Wasservolumina ist es aus dem Stand der Technik bekannt, Elektroden unterschiedlichen Materials in das Wasservolumen einzubringen und zur Ausbildung eines geringen Stromflusses eine elektrische Spannung zwischen den Elektroden anzulegen. Ein solches Verfahren ist beispielsweise aus Patent Abstracts of Japan Vol. 017, No. 523 (C-1113), 21. September 1993 & JP 05 146234 A, 15. Juni 1993 bekannt. Bei diesem Verfahren werden als Elektroden eine Kupferanode und eine Eisenkathode verwendet. Auch aus der US 3,752,747 geht ein solches Verfahren hervor. Hierbei werden als Elektroden, die mit einer von außen angelegten elektrischen Spannung beaufschlagt werden, eine Elektrode aus einem Inertmaterial, beispielsweise Graphit oder ein Eisen mit hohem Siliciumanteil, und eine Elektrode aus einem aktiven Material, beispielsweise Kupfer oder Aluminium, verwendet. Auch bei einem aus der US 5,148,772 bekannten Verfahren werden zur Behandlung eines Wasservolumens zwei mit einer gemeinsamen Spannungsquelle verbundene Elektroden verwendet.

Eine weitere Möglichkeit der Behandlung von Wasservolumina ist in der US 4,416,854 beschrieben. Bei dem dort beschriebenen Verfahren zum Abtöten von Mikroorganismen werden zwei elektrolytisch reaktive, elementare Metalle in Form von Metallflocken miteinander vermengt in einem gemeinsamen Gehäuse angeordnet. Das mit diesem Gemenge gefüllte Gehäuse wird in das zu behandelnde Wasservolumen eingebracht.

Der vorliegenden Erfindung liegt die **Aufgabe** zugrunde, ein Verfahren zur Entspannung von Süßwasser und/oder zur Stabilisierung des Gleichgewichtes eines Süßwasservolumens, insbesondere im Hinblick auf übermäßige Ausbreitung von Organismen sowie Keimbildung bereitzustellen, welches ohne den Einsatz rein chemischer Mittel wirksam ist, mit geringem wirtschaftlichen Aufwand einsetzbar und einfach handhabbar ist.

Zur technischen **Lösung** dieser Aufgabe wird mit der Erfindung vorgeschlagen, in das Süßwasservolumen wenigstens zwei unterschiedliche Metalle, welche in der elektrochemischen Spannungsreihe weit auseinander liegen, nämlich Kupfer und Zink, mit Abstand zueinander und voneinander separiert direkt einzubringen.

Es hat sich überraschenderweise gezeigt, daß das Einbringen entsprechender Metallelemente in Süßwasserreservoirs die übermäßige Ausbreitung von Organismen weitestgehend unterbindet, das Gleichgewicht des Süßwassers stützt und sogar die Qualität verbessern kann. Auch ist eine Entspannung des Wassers meßbar.

Es wird angenommen, daß die beiden Metalle, eingebracht in das Süßwasservolumen, eine minimale Anodenreaktion ausbilden, welche wahrscheinlich ausreicht, um Schwingungen im Kleinstteilchenbereich, wahrscheinlich sogar im Molekülbereich zu erzeugen. Dadurch wird wahrscheinlich Organismen, insbesondere Algen, die Möglichkeit genommen, sich an bestimmten Bereichen im Süßwasservolumen festzusetzen und sich auszubreiten. Abschließende Erklärungen der überraschenden Wirkung liegen noch nicht vor.

Es werden zueinander beabstandet wenigstens zwei Körperelemente aus jeweils unterschiedlichen Metallen, welche in der elektrochemischen Spannungsreihe weit auseinander liegen, nämlich Kupfer und Zink, in das Süßwasser eingebracht. Die besonders gute Wirkung läßt sich erzielen, da eines der Metalle aus dem Bereich mit negativen und ein anderes Metall aus dem Bereich mit positivem Normalpotential verwendet wird. Der Effekt der Materialkombination Kupfer/Zink ist besonders überraschend, denn insbesondere im Aquariumbereich wurde das Einbringen von Kupfer wegen der vermuteten negativen Folgen für die Fische möglichst vermieden. Es hat sich jedoch gezeigt, daß das Einbringen einer entsprechenden Kupferanode praktisch keine schädlichen oder negativen Lösungsreaktionen nach sich zieht, also keinerlei nachteilige Wirkung auf die Pflanzen oder Fische in einem Aquarium bringt.

In vorteilhafter Weise werden die Körperelemente aus Metall vor direkter Berührung mit anderen Metallelementen abgeschirmt. Die Metallkörperelemente sind vorzugsweise plattenförmig und gemäß einem besonders vorteilhaften Vorschlag separiert in mit Öffnungen versehene Kunststoffgehäuse eingesetzt. Die Kunststoffgehäuse können wenigstens teilweise als Gitter ausgebildet sein, um Oberflächen des eingebrachten Metallkörpers frei wirksam werden zu lassen.

Die Kunststoffgehäuse werden je nach Einsatzfall mit entsprechenden Halterungen in das Süßwasservolumen eingebracht. Dabei kann es sich um Randhalterungen handeln, also Elemente, die an den Rand eines abgegrenzten Volumenbereiches aufsteckbar oder sonstwie fixierbar sind. Es kann sich auch um Saugköpfe handeln, die beispielsweise im Aquariumbereich oder auch im Schwimmbadbereich an die Wandung des Volumenbehälters angeordnet werden können. Auch ist es denkbar, die Metallkörper in dekorativen Elementen unterzubringen, also in Kunststoffgehäusen mit Steinform, Modellform und dergleichen.

Eine Vorrichtung zur Durchführung des Verfahrens kann zur Verbesserung des Verfahrens eine Einheit zur Reinigung der freien Oberfläche des Metallkörpers aufweisen. Dabei können mögliche Oxidationsschichten von der Metalloberfläche entfernt werden.

Mit der Erfindung wird eine einfache, wirkungsvolle und mit geringem wirtschaftlichen Aufwand sowie leicht handhabbare Maßnahme zur Stabilisierung eines Süßwasservolumens vorgeschlagen, welche den Einsatz von Chemikalien beispielsweise zur Verhinderung eines Algenwachstums verringert oder gar verhindern kann.

Weitere Vorteile und Merkmale der Erfindung ergeben sich aus der folgenden Beschreibung anhand der Figuren. Dabei zeigen:
- Figur 1: eine schematische Ansicht einer möglichen Anordnung zur Durchführung des Verfahrens im Aquariumbereich und
- Figur 2: eine Ansicht eines möglichen Körperelementes für das Verfahren.

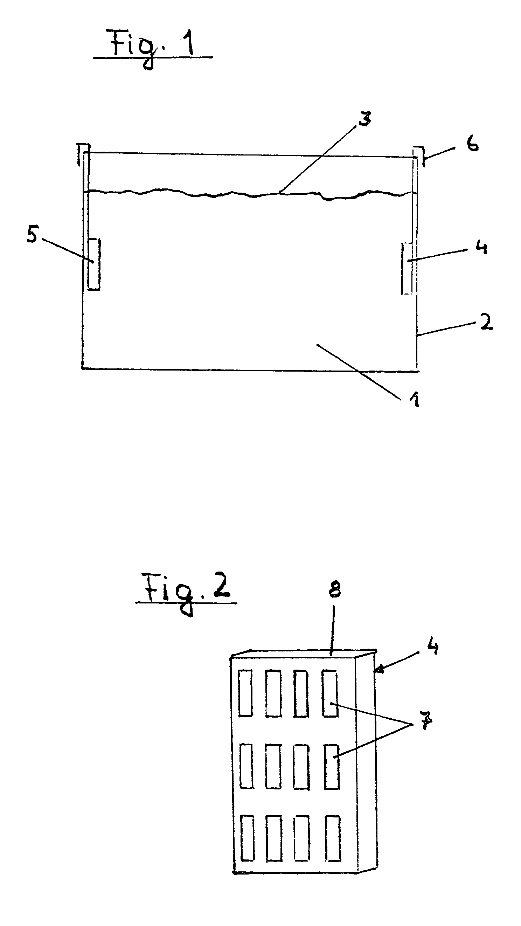

Figur 1 zeigt schematisch einen Behälter 2, beispielsweise ein herkömmliches Aquarium, in welchem ein Wasservolumen 1 bis zur Füllhöhe 3 eingebracht ist. Mittels Randhalterungen 6 sind zwei im wesentlichen plattenförmige Körperelemente 4, 5 in das Volumen eingebracht.

Die Körperelemente 4, 5 können beispielhaft, wie in Figur 2 gezeigt, ausgebildet sein. In einem Kunststoffgehäuse 8 mit schlitzartigen Öffnungen 7 an wenigstens einer der Oberflächen ist ein plattenförmiges Metallelement eingebracht. Ein identisches Kunststoffgehäuse 8 mit einem unterschiedlichen Metallelement ergänzt das Paar zu erfindungsgemäßen Vorrichtung. Die beiden Kunststoffgehäuse mit jeweils unterschiedlichen Metallkörpers werden möglichst weit voneinander beabstandet in das Süßwasservolumen ausgebracht.

Eine nicht gezeigte Einheit zur Reinigung der freien Oberflächen der Metallkörper kann beispielsweise eine automatisch betriebene Vorrichtung sein, welche eine Relativbewegung der freien Metalloberfläche zu einer Reinigungsoberfläche erzeugt.

Die beschriebenen Ausführungsbeispiele dienen der Erläuterung und sind nicht beschränkend.

### Bezugszeichenliste

- 1: Süßwasservolumen
- 2: Behälter
- 3: Füllstand
- 4: Metall-Körperelement
- 5: Metall-Körperelement
- 6: Randhalterung
- 7: Öffnungen
- 8: Kunststoffgehäuse

## Patentansprüche

1. Verfahren zur Entspannung und/oder zur Stabilisierung des Gleichgewichts eines Süßwasservolumens, insbesondere im Hinblick auf übermäßige Ausbreitung von Organismen sowie Keimbildung, wobei zwei unterschiedliche Metalle, welche in der elektrochemischen Spannungsreihe weit auseinander liegen, nämlich Kupfer und Zink, mit Abstand zueinander und voneinander separiert direkt in das Wasservolumen eingebracht werden.

2. Verfahren nach Anspruch 1, **dadurch gekennzeichnet, daß** die Metalle in Form plattenförmiger Elemente in mit Öffnungen versehenen Kunststoffgehäusen in das Wasservolumen eingebracht werden.

3. Verfahren nach einem der vorhergehenden Ansprüche, **dadurch gekennzeichnet, daß** die Metalle in wenigstens bereichsweise gitterförmig ausgebildete Gehäuse eingebracht werden.

4. Verfahren nach einem der vorhergehenden Ansprüche, **dadurch gekennzeichnet, daß** die Metalle in Form von Körperelementen mittels einer Halterung in das Wasservolumen eingebracht und dort fixiert werden.

5. Verfahren nach einem der vorhergehenden Ansprüche, **dadurch gekennzeichnet, daß** die in Form von Körperelementen in das Wasservolumen eingebrachten Metalle mit zu Reinigungszwecken freien Oberflächen ausgebildet werden.

## Claims

1. A method of tension release and/or stabilising the balance of a volume of sweet water, particularly with regard to the excessive spread of organisms and the formation of germs, wherein two different metals, which are far apart in the electrochemical voltage series, namely copper and zinc, are introduced directly into the water volume at a distance from one another and separated from one another.

2. A method as claimed in Claim 1, **characterised in that** the metals are introduced into the volume of water in the form of plate-shaped elements in plastic housings provided with openings.

3. A method as claimed in one of the preceding claims, **characterised in that** the metals are introduced in housings which are of grid-like construction, at least in regions.

4. A method as claimed in one of the preceding claims, **characterised in that** the metals are introduced into the volume of water in the form of body elements by means of a holding device and are fixed in position there.

5. A method as claimed in one of the preceding claims, **characterised in that** the metals introduced into the volume of water in the form of body elements have exposed surfaces for cleaning purposes.

## Revendications

1. Procédé de détente et/ou de stabilisation de l'équilibre d'un volume d'eau douce, en particulier en ce qui concerne la diffusion excessive d'organismes ainsi que la germination, sachant que deux métaux différents, qui sont placés loin l'un de l'autre dans la série électrochimique, c'est à dire le cuivre et le zinc, sont introduits directement dans le volume d'eau séparés à une certaine distance l'un de l'autre.

2. Procédé selon la revendication 1, **caractérisé en ce que** les métaux sous forme d'éléments sous forme de plaques sont introduits dans le volume d'eau dans des boîtiers en plastique munis d'ouvertures.

3. Procédé selon l'une des revendications précédentes, **caractérisé en ce que** les métaux sont introduits dans des boîtiers configurés au moins à la façon de la zone sous forme de grille.

4. Procédé selon l'une des revendications précédentes, **caractérisé en ce que** les métaux sous forme d'éléments de corps sont introduits dans le volume d'eau par une attache et y sont fixés.

5. Procédé selon l'une des revendications précédentes, **caractérisé en ce que** les métaux introduits dans le volume d'eau sous forme d'éléments de corps sont configurés avec des surfaces libres à des fins de nettoyage.
